# DEMANDE DE BREVET EUROPEEN

(11) **EP 4 575 173 A1**
(43) Date de publication de la demande: **25.06.2025**
(21) Numéro de dépôt: 24219870.3
(22) Date de dépôt: 13.12.2024
(51) Int. Cl.: E06B 9/32, E06B 9/322, E06B 9/68, G05B 99/00, G05B 19/042

(54) **ALGORITHME DE DÉTECTION D'UNE SURCHAUFFE À PARTIR D'UNE MESURE DE TEMPÉRATURE EXTÉRIEURE**

(30) Priorité: 18.12.2023 FR 2314365
(71) Demandeur: Somfy Activites SA, 74300 Cluses (FR)
(72) Inventeur: BERNABEU, Noé, 74300 CLUSES (FR); RAYBAUD, Blaise, 74300 CLUSES (FR)
(74) Mandataire: Germain Maureau

(57) **Abrégé**

Procédé de gestion d'une installation domotique (100) d'un bâtiment (1) comprenant une protection solaire (3) motorisée, une unité de gestion (102) d'une position prise par la protection solaire (3), un dispositif de commande (104) comprenant au moins un capteur de mesure d'une température extérieure (202) au bâtiment (1) et un moyen de détermination de luminosité (220),
le procédé comprenant :
- Une étape (E1) de mesure des valeurs de température extérieure (T) et de luminosité (L) sont relevées ;
- Une étape (E2) d'analyse des valeurs de luminosité permettent de déterminer une période de faible luminosité (pn),
- Une étape (E3) de détermination des températures extérieures minimale (Tmin) et maximale (Tmax) sur la période de faible luminosité (pn) ;
- Une étape (E4) de commande sur une période de forte luminosité de la position prise par la protection solaire (3) en fonction des températures extérieures minimale (Tmin) et maximale (Tmax).

## Description

L'invention concerne le domaine de la gestion d'un confort thermique à l'intérieur d'un bâtiment et plus particulièrement un procédé de gestion d'une installation domotique et un terminal d'une installation domotique.

Un bâtiment à usage domestique ou professionnel dispose d'un ensemble d'éléments actifs, comme des dispositifs de climatisation ou de chauffage, ou passifs, comme par exemple des protections solaires telles que des volets roulants ou des stores, ou des ouvrants permettant de gérer de la ventilation naturelle, dont un comportement, notamment par le biais d'un pilotage automatique, a une influence forte sur une évolution d'un confort thermique, c'est-à-dire une température intérieure du bâtiment, et d'un confort visuel intérieur.

Plusieurs phénomènes peuvent influencer le confort thermique dans le bâtiment, notamment :
- des conditions climatiques extérieures, dont les radiations solaires directes ou l'irradiance des objets extérieurs, la température extérieure, par leurs impacts sur une enveloppe externe du bâtiment, font évoluer la température intérieure avec une plus ou moins grande inertie. Cette dernière varie notamment en fonction des matériaux de construction, d'une isolation du bâtiment, d'une orientation des ouvertures, et d'une géométrie du bâtiment ;
- les dispositifs de climatisation et de chauffage peuvent également faire évoluer la température intérieure du bâtiment, notamment en compensant, à hausse ou à la baisse, des apports énergétiques issus d'autres sources d'énergie ;
- des activités effectuées à l'intérieur du bâtiment, comme une mise en fonctionnement d'un four, ou d'une cheminée, ou une présence d'un grand nombre de personnes, etc... font fortement également évoluer la température intérieure du bâtiment.

Parmi ces phénomènes, l'irradiance et plus précisément la radiation solaire transmise à travers un vitrage d'une ouverture du bâtiment est l'une des composantes prédominantes d'une augmentation de la température intérieure.

Ainsi, un pilotage des protections solaires, c'est-à-dire une commande d'ouverture ou de fermeture de la protection solaire, en interagissant directement avec l'extérieur à un impact direct et important sur le confort thermique et visuel, avec une dépense énergétique très limitée pour assurer ce pilotage. Autrement dit, une bonne gestion des protections solaires permet de faire varier de plusieurs degrés la température intérieure du bâtiment.

On appelle pilotage ou gestion d'une protection solaire une modification des positions de la protection solaire au cours du temps entre une position déployée ou déroulée dans laquelle elle arrête au moins une partie d'un rayonnement solaire, et une position repliée ou enroulée dans laquelle elle arrête une partie moins importante du rayonnement solaire.

Un pilotage, ou une gestion, manuelle n'est pas optimale d'un point de vue énergétique car il est difficile pour un occupant du bâtiment de savoir exactement quelle est la position idéale de la protection solaire à chaque instant, et à quel moment il doit l'ouvrir ou la fermer. De plus, en cas d'inoccupation du bâtiment les mouvements sont impossibles contrairement à un pilotage automatique qui assure en continu le positionnement des protections. Il est donc important de pouvoir gérer le pilotage automatique de manière optimale, notamment pour limiter l'augmentation de la température intérieure.

Il est connu des solutions mettant en oeuvre une gestion ou un pilotage automatisé des protections solaires pour limiter l'augmentation de la température intérieure utilisant un ensemble de capteurs, par exemple de capteurs de luminosité intérieurs ou extérieurs, d'une horloge crépusculaire en lien avec une centrale domotique, de prévisions météorologiques et/ou d'un paramétrage thermique du bâtiment. En particulier, le brevet EP2682825 propose un procédé de détermination des conditions climatiques d'une journée à venir à partir de la température extérieure au bâtiment relevée au moment de lever du soleil. Les conditions climatiques sont déterminées pour la journée en fonction d'une comparaison de cette température extérieure obtenue au lever du soleil avec différents seuils. Ce procédé permet ainsi de déterminer des conditions climatiques hivernales, automnales, printanières ou estivales. La gestion des protections solaires est adaptée pour privilégier ou limiter au juste niveau les apports solaires en fonction des conditions climatiques déterminées, notamment en fonction d'une saison déterminée à partir de cette température extérieure au lever du soleil. Le recueil des données et la comparaison avec des seuils prédéfinis pour déterminer les conditions de saison est simple mais peu précise pour identifier les conditions conduisant à une situation de surchauffe pendant la journée.

On définit qu'une situation de surchauffe correspond à une situation du bâtiment dans laquelle la température intérieure devient supérieure à une valeur maximum d'une plage de température de confort.

L'invention a pour but de remédier à tout ou partie des inconvénients précités en proposant, un procédé de gestion d'une installation domotique d'un bâtiment comprenant au moins une protection solaire motorisée, une unité de gestion d'une position prise par la protection solaire au cours du temps, et au moins un dispositif de commande comprenant au moins un capteur de mesure d'une température extérieure au bâtiment et un moyen de détermination de luminosité, le procédé étant mis en oeuvre par l'unité de gestion et comprenant :
L'invention concerne un procédé de gestion d'une installation domotique d'un bâtiment comprenant au moins une protection solaire motorisée, une unité de gestion d'une position prise par la protection solaire au cours du temps, et au moins un dispositif de commande comprenant au moins un capteur de mesure d'une température extérieure au bâtiment et un moyen de détermination de luminosité, le procédé étant mis en oeuvre par le dispositif de commande localisé au moins en partie à l'extérieur du bâtiment et comprenant :
- Une étape de mesure dans laquelle des valeurs de température extérieure et de luminosité sont relevées ;
- Une étape d'analyse dans laquelle les valeurs de luminosité relevées permettent de déterminer au moins une période de faible luminosité,
- Une étape de détermination des températures extérieures minimale et maximale sur la période de faible luminosité ;
- Une étape de commande sur une période de forte luminosité, à destination de l'unité de gestion, de la position prise par la protection solaire en fonction des températures extérieures minimale et maximale relevées sur la période de faible luminosité, ladite période de forte luminosité étant successive à la période de faible luminosité.

Une période de faible luminosité correspond par exemple à une période de nuit. La période de faible luminosité est déterminée par une analyse des mesures de luminosité extérieure réalisée. On considère que pendant la période de faible luminosité, le capteur de mesure de la température extérieure n'est pas influencé par une radiation solaire, ou un rayonnement solaire direct et sont donc plus fiables, et ceci indépendamment de la localisation du dispositif de commande, susceptible ou non de recevoir du rayonnement solaire direct, sur une façade du bâtiment.

Le fait de relever les valeurs de température extérieure pendant des périodes de faible luminosité permet donc de s'affranchir des biais introduits par un rayonnement solaire direct ou indirect sur le dispositif de mesure de température, qui nécessitent un traitement complexe ou qui introduisent des erreurs.

Par exemple, la période de faible luminosité peut être définie comme la période pendant laquelle la luminosité extérieure relevée par le moyen de détermination de luminosité est inférieure à un seuil de nuit pendant au moins une partie de la période de faible luminosité.

Le procédé est basé sur le principe qu'une situation de surchauffe à venir, c'est-à-dire sur la période de forte luminosité successive à la période de faible luminosité, correspond à une situation du bâtiment pour laquelle des extrema de températures nocturnes, c'est-à-dire sur la période de faible luminosité, sont supérieurs à des valeurs seuils prédéterminées. Ces valeurs seuils prédéterminées sont par exemple choisies équivalentes à un minima d'une plage de température de confort thermique dans le bâtiment. Autrement dit, une situation de surchauffe pendant le jour est probable lorsque la température extérieure nocturne n'a pas baissé en dessous desdits seuils prédéterminées.

Le procédé selon l'invention comprend ainsi une étape de mesure au cours de laquelle la température extérieure est mesurée et enregistrée au cours du temps pendant la période de faible luminosité. De préférence, ces températures sont enregistrées dans une mémoire du dispositif de commande.

Le procédé comprend une étape de détermination dans laquelle une analyse mathématique de ces températures est réalisée, notamment de sorte à déterminer un minimum et un maximum. D'autres analyses mathématiques sont possibles en complément, telles que par exemple une moyenne glissante des minima/maxima de température sur plusieurs jours.

La mesure de luminosité permet d'une part de déterminer la période de faible luminosité pour la prise en compte des températures adaptées à la détermination des extrema, mais également de déterminer la fin de cette période de faible luminosité, caractéristique du début d'une période de forte luminosité ou journée, pendant laquelle une commande va pouvoir être émise.

Selon un mode de réalisation, l'étape de commande est fonction de la luminosité mesurée sur la période de forte luminosité.

Ainsi, la commande de la position prise par la protection solaire est adaptée en fonction de la luminosité mesurée. La commande s'adapte donc en temps réel à la luminosité extérieure de sorte à minimiser un risque d'atteindre une situation de surchauffe dans le bâtiment tout en permettant une bonne prise en compte d'un confort visuel des utilisateurs du bâtiment.

Le procédé contribue donc à limiter les situations de surchauffe dans le bâtiment par la fermeture anticipée appropriée des protections solaires pour limiter les apports thermiques lorsque cela est approprié. Notamment, le procédé vise à conserver la température intérieure dans le bâtiment dans une plage de température de confort. Une telle température de confort est généralement comprise dans l'intervalle [16°, 30°], par exemple l'intervalle [19°, 27°], de préférence l'intervalle [21°, 26°].

Selon un mode de réalisation, la période de faible luminosité est définie pour des valeurs de luminosité inférieures à 300 lux.

La distinction d'une période de faible luminosité ou nuit est basée sur une valeur de luminosité très faible. Une valeur seuil de 300 lux permet de prendre en compte la grande majorité des environnements lumineux nocturnes.

Selon un mode de réalisation, une succession de valeurs de la température extérieure sur la période de faible luminosité est relevée par échantillonnage de mesures de la température extérieure sur la période de faible luminosité.

La température extérieure est influencée par différents phénomènes. Ainsi, il n'est pas suffisant d'utiliser une valeur unique de température comme un marqueur représentatif d'une situation nocturne. D'autre part, on veut pouvoir limiter les ressources nécessaires au calcul et il est donc préférable d'éviter une analyse de variation de la température extérieure pendant toute la période de faible luminosité.

Afin que le procédé soit facile à mettre en oeuvre, il réalise ainsi la détection de la probabilité de surchauffe sur la base d'informations de température, notamment de température extérieure nocturne, et éventuellement d'informations de luminosité. Plus précisément, pour minimiser une consommation en énergie du dispositif de commande, les informations de température sont issues d'une succession de mesures de température extérieures espacées d'un intervalle de temps d'échantillonnage, ce dernier étant de préférence compris entre 0h et 1h, par exemple 15 minutes, pendant une période caractérisée par une faible luminosité, autrement dit pendant la nuit.

Autrement dit, la mesure de température est réalisée de manière périodique, suivant une période d'échantillonnage.

Selon un mode de réalisation, le procédé comprend une mise à jour d'un premier compteur de temps associé à la période de faible luminosité et d'un deuxième compteur de temps associé à la période de forte luminosité.

Ceci permet de démarquer les situations de faible luminosité ou de forte luminosité durables de fausses détections de situations de faible luminosité ou de forte luminosité ponctuelles. On s'assure ainsi également du caractère consécutif d'une période de faible luminosité et d'une période de forte luminosité et de la pertinence temporelle des mesures de température prises en compte pour la détermination de la commande.

Selon un mode de réalisation, le procédé comprend une étape de détermination d'un coefficient de réactivité.

De manière avantageuse, le procédé permet de déterminer un coefficient de réactivité de l'installation à appliquer lors de la journée pendant l'étape de commande. Le coefficient de réactivité dépend des relevés de températures nocturnes, ce coefficient de réactivité traduisant notamment une réactivité de l'installation à modifier la position prise par les protections solaires dans le temps et/ou une amplitude de réaction, c'est-à-dire un niveau de fermeture des protections solaires, de l'installation face à une situation de surchauffe actuelle ou à venir.

Le coefficient de réactivité est déterminé sur la base des informations de température et notamment de l'analyse mathématique de ces températures au cours de la période de faible luminosité.

Selon un mode de réalisation, le coefficient de réactivité est déterminé en fonction d'une comparaison de la température extérieure maximale relevée avec un premier seuil et d'une comparaison de la température extérieure minimale avec un second seuil.

Plus précisément, le coefficient de réactivité est déterminé en fonction d'une comparaison de la température extérieure maximale relevée avec un premier seuil et d'une comparaison de la température extérieure minimale avec un second seuil distinct du premier seuil. La réactivité de l'installation dépend ainsi des extrema de températures déterminés précédemment et de seuils de température prédéfinis pour l'installation.

Selon un mode de réalisation, la protection solaire prend une position au moins partiellement déployée lorsque d'une part le coefficient de réactivité déterminé est associé à une commande de mouvement et d'autre part lorsque la valeur de luminosité mesurée dépasse un seuil de luminosité, ledit seuil de luminosité étant associé au coefficient de réactivité déterminé.

La position prise par la protection solaire de l'installation dépend ainsi des extrema de températures déterminés précédemment via le coefficient de réactivité, et de la luminosité ambiante.

Selon un mode de réalisation, le coefficient de réactivité correspond à au moins un seuil de luminosité à partir duquel une commande de mouvement de protection solaire va avoir lieu.

En particulier, un coefficient de réactivité faible, n'entraînant aucune commande, ne correspond à aucun seuil de luminosité ou à un seuil de luminosité très élevé largement supérieur à 60000 lux.

Un coefficient de réactivité moyen correspond par exemple à un seuil de luminosité moyen autour de 25000 lux.

Un coefficient de réactivité élevé correspond à un seuil de luminosité bas, par exemple autour de 3000 lux.

Autrement dit, une commande pourra avoir lieu dès que la luminosité mesurée sera supérieure à ce seuil de luminosité.

Selon un mode de réalisation, le procédé comprend une étape de détermination d'un coefficient de position.

De manière avantageuse, le procédé permet de déterminer un coefficient de position de l'installation lors de la journée, par exemple en fonction des relevés de températures nocturnes. Ce coefficient de position traduit notamment une adaptation de la commande de la position prise par la protection solaire de l'installation en prévision d'une situation de surchauffe. Plus particulièrement, le coefficient de position correspond à un niveau de fermeture des protections solaires, par exemple un pourcentage de fermeture.

Selon un mode de réalisation, le coefficient de position est déterminé en fonction d'une comparaison de la luminosité mesurée sur la période de forte luminosité avec au moins un seuil de luminosité et en fonction de la comparaison de la température maximale relevée avec un premier seuil de position ou d'une comparaison de la température minimale avec un second seuil de position.

L'adaptation de l'installation dépend ainsi des extrema de températures déterminés précédemment et de la luminosité ambiante. Une commande de position prise par la protection solaire peut ainsi être émise lors de changements de luminosité ambiante tout au long de la période de forte luminosité.

Selon un mode de réalisation, le premier seuil de position est égal au premier seuil et/ou le second seuil de position est égal au second seuil.

Selon un mode de réalisation, le coefficient de position est déterminé en fonction d'un indice thermo-visuel représentant une pondération entre confort thermique et confort visuel, présélectionné par un utilisateur de l'installation domotique.

L'adaptation de l'installation dépend ainsi d'un paramétrage de l'installation, correspondant aux souhaits d'un utilisateur de l'installation.

Le procédé de gestion selon l'invention peut fonctionner indépendamment, ou conjointement à un autre procédé de gestion de surchauffe mis en place indépendamment et basé éventuellement sur d'autres critères.

Le procédé de gestion selon l'invention permet de prendre en compte différents scénarii ou probabilités de surchauffe et d'affecter en fonction de ces différents scénarii ou probabilités, un coefficient de réactivité et/ou un coefficient de position adapté. Le procédé participe donc proactivement et dynamiquement à une prévention de situation de surchauffe dans un bâtiment, notamment lors d'une saison d'été.

L'invention porte également sur un dispositif de commande d'une installation domotique d'un bâtiment mettant en oeuvre un procédé de gestion selon l'invention, comprenant un capteur de mesure de température extérieure et un moyen de détermination de luminosité, le dispositif de commande comprenant une unité électronique de commande comprenant une unité de communication et un contrôleur.

L'intérêt particulier de ce procédé est de s'appuyer principalement sur un dispositif de commande disposé à l'extérieur d'un bâtiment, comprenant à la fois un capteur de mesure de température et un moyen de détermination de luminosité. Alternativement, les valeurs de température et de luminosité sont fournies par deux dispositifs de mesure séparés et distincts, permettant de recueillir des données de température et de luminosité à l'extérieur du bâtiment.

Selon un mode de réalisation, le dispositif comprend un panneau photovoltaïque et une batterie rechargeable alimentant le dispositif de commande, le dispositif de commande étant adapté à être fixé sur une façade à l'extérieur du bâtiment, le panneau photovoltaïque étant adapté à recharger la batterie.

Le dispositif de commande est ainsi autonome en énergie. Il peut être également totalement déconnecté d'un réseau de données externe et donc fonctionner uniquement sur la base des données qu'il mesure.

Selon un mode de réalisation, le moyen de détermination de luminosité est une mesure du courant fourni par le panneau photovoltaïque à la batterie rechargeable.

Ainsi le dispositif de commande est simple et indépendant d'un capteur physique spécifiquement prévu pour la mesure de luminosité.

L'invention sera mieux comprise, grâce à la description ci-après, qui se rapporte à plusieurs modes de réalisation selon la présente invention, donnés à titre d'exemples non limitatifs et expliqués avec référence aux dessins schématiques annexés, dans lesquels :
[FIG. 1] est une représentation schématique d'un bâtiment comprenant une installation domotique mettant en oeuvre un procédé conforme à l'invention ;
[FIG. 2] est une coupe schématique transversale d'une protection solaire de l'installation domotique de la figure 1 ;
[FIG. 3] est une vue schématique en perspective de la protection solaire illustrée à la figure 2 ;
[FIG. 4] est une vue en perspective de dessous d'un dispositif de commande permettant de mettre en oeuvre un procédé selon l'invention ;
[FIG. 5] est une vue de dessus partiellement éclatée du dispositif de commande de la figure 5;
[FIG. 6] est une illustration d'un procédé selon l'invention ;
[FIG. 7] représente un tableau de conditions utilisées dans un mode de réalisation du procédé selon l'invention
[FIG. 8] représente un tableau de conditions utilisées dans un mode de réalisation alternatif du procédé selon l'invention.

La solution proposée ici est relative à une gestion automatique d'une position d'une protection solaire au cours du temps permettant d'agir sur un confort thermique d'une zone d'un bâtiment.

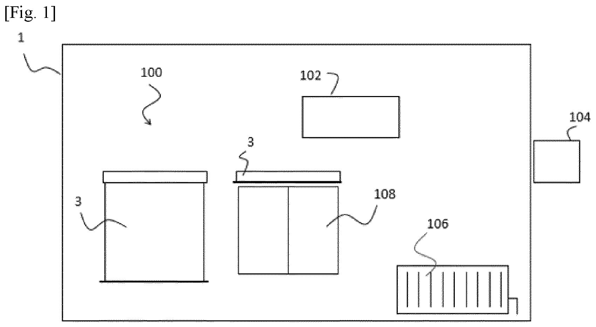

Comme illustré à la figure 1, un bâtiment 1 comprend une installation domotique 100 comprenant une protection solaire motorisée 3. L'installation domotique 100 comprend une unité de gestion 102 d'une position prise par la protection solaire 3 au cours du temps.

L'installation comprend également au moins un dispositif de commande 104 d'une installation domotique. Des dispositifs de climatisation et de chauffage 106 peuvent également être présents dans la zone du bâtiment.

La protection solaire 3 est installée à l'extérieur ou à l'intérieur du bâtiment, en particulier à proximité d'une ouverture 108 du bâtiment. Une ouverture 108 est par exemple une fenêtre, une porte-fenêtre ou une porte vitrée. La protection solaire est avantageusement un store d'intérieur ou d'extérieur en toile ou muni de lames orientables. La présente invention s'applique cependant à tous les types de protection solaire.

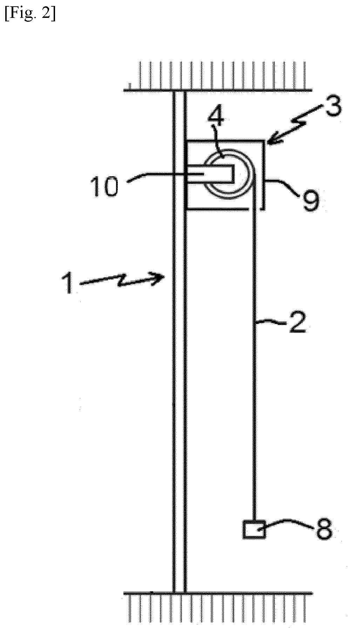

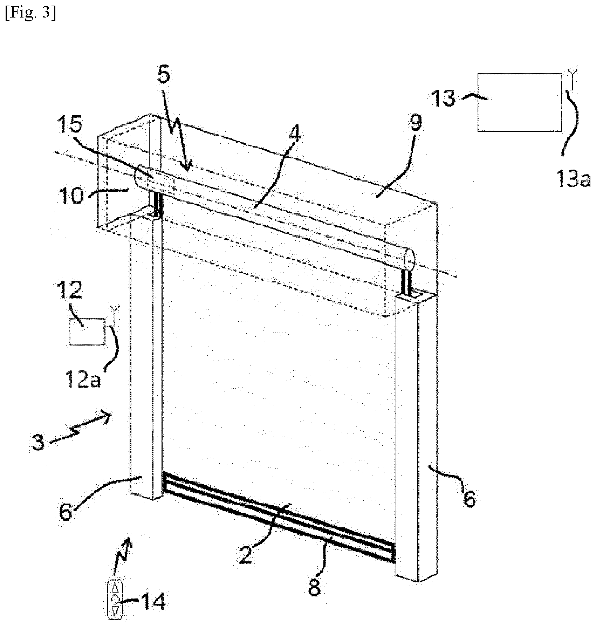

Comme représenté sur les figures 2 et 3, la protection solaire 3 comprend une toile 2 fixée par une de ses extrémités sur un arbre d'enroulement 4, disposé à l'intérieur d'un coffre 9 et entraîné par un actionneur électromécanique 5, et par l'autre extrémité à une barre lestée 8. La protection solaire 3, et plus particulièrement la toile 2 est mobile entre une position enroulée ou repliée, en particulier haute, dans laquelle la toile 2 découvre l'ouverture 108 au niveau de laquelle la protection solaire est positionnée, et une position déroulée ou déployée, en particulier basse, dans laquelle la toile 2 couvre l'ouverture et bloque ainsi au moins partiellement le rayonnement solaire à travers l'ouverture 108. Le déploiement de la toile 2 peut être guidé par des coulisses 6.

De manière connue, l'actionneur électromécanique 5 est fixé sur une structure porteuse 9 liée au bâtiment 1 et inséré dans l'arbre d'enroulement 4 en forme de tube pour entraîner celui-ci en rotation de sorte à dérouler ou enrouler la toile 2.

Dans le cas d'une protection solaire de type store à lames, les différentes lames du store sont de préférence suspendues via des cordons destinés à être enroulés sur l'arbre d'enroulement ou déroulés de l'arbre d'enroulement de sorte à replier ou déployer l'écran.

L'actionneur électromécanique 5 est commandé par une unité de commande locale 12 pouvant être munie d'une antenne 12a. L'unité de commande locale 12 prend la forme d'un interrupteur mural, ou d'une télécommande.

L'installation 100 peut également comprendre une unité de commande centrale 13 pouvant être munie d'une antenne 13a, qui assure un rôle de passerelle entre l'installation 100 et un réseau Internet extérieur à l'installation. Le dispositif de commande 104 peut être une unité de commande locale 12 ou centrale 13, ou un ensemble d'une commande locale 12 et d'une commande centrale 13.

L'actionneur électromécanique 5 est configuré pour exécuter des commandes de déplacement, notamment de déploiement ou de repli, des protections solaires 3, les commandes pouvant être émises, notamment, par l'unité de commande locale 12 ou l'unité de commande centrale 13, qui font partie de l'installation 100.

L'actionneur électromécanique 5 comprend un moteur électrique 10 et une unité électronique de contrôle 15 apte à mettre en fonctionnement le moteur électrique 10 de l'actionneur électromécanique 5, et, en particulier, permettre l'alimentation en énergie électrique du moteur électrique 10.

L'actionneur électromécanique 5 peut comprendre une liaison vers une source d'énergie secteur ou peut comprendre un dispositif d'alimentation en énergie électrique autonome, comme par exemple le panneau photovoltaïque 206 et/ou un dispositif de stockage d'énergie électrique tel que la batterie rechargeable 204.

L'unité électronique de contrôle 15 comprend un module de communication, en particulier de réception d'ordres de commande, les ordres de commande étant émis par l'unité de commande locale 12 ou l'unité de commande centrale 13, par exemple par le biais d'ordres de commande radioélectriques.

Une télécommande 14, pouvant être un type d'unité de commande locale, et pourvue d'un clavier de commande, qui comprend des moyens de sélection et éventuellement d'affichage, permet, en outre, à un utilisateur d'intervenir sur l'actionneur électromécanique 5 et/ou l'unité de commande locale 12 et/ou centrale 13.

Le dispositif de commande 104 de l'installation domotique permet d'agir sur une protection solaire installée à l'extérieur ou à l'intérieur d'une pièce du bâtiment 1, c'est-à-dire à l'extérieur ou à l'intérieur d'une pièce du bâtiment 1 comprenant au moins une ouverture 108 qui peut être masquée ou non ou partiellement par la protection solaire 3. Le dispositif de commande 104 peut être réparti sur plusieurs unités de commande installées à l'extérieur et/ou à l'intérieur du bâtiment, telles qu'une ou plusieurs unités de commande locales 12 et/ou centrales 13. En particulier, le dispositif de commande 104 comprend un dispositif extérieur 200.

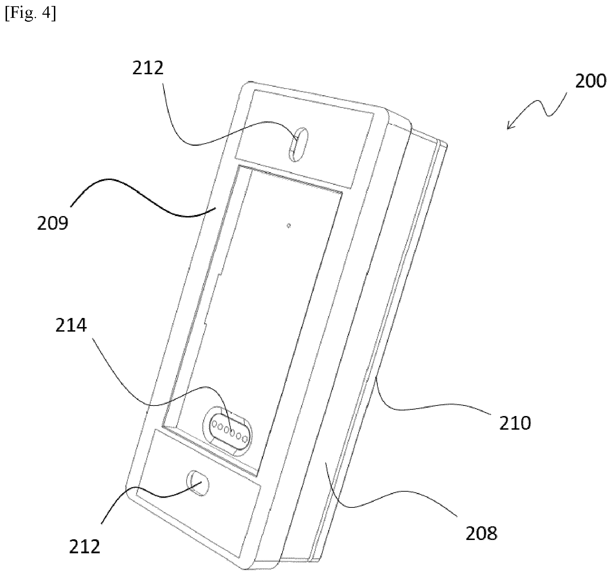

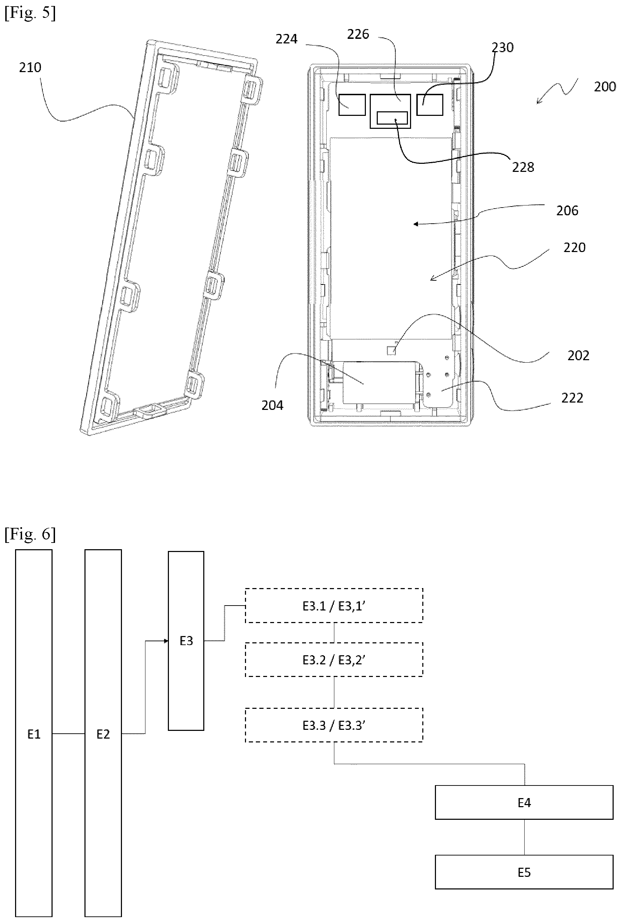

Comme représenté sur les figures 4 et 5, le dispositif extérieur 200 comprend un boîtier 208 comprenant un socle 209 et un couvercle 210 translucide rapporté sur le socle. Le socle 209 est muni de moyens de fixation 212, permettant de fixer celui-ci à une paroi du bâtiment 1, notamment à l'extérieur du bâtiment 1. Le socle 209 intègre également des broches de connexion 214.

Le dispositif de commande 104 et plus particulièrement le dispositif extérieur 200, comprend au moins un capteur de mesure de température 202, un moyen de détermination de luminosité 220 et au moins une unité électronique de commande 222, sous forme d'un circuit imprimé, comprenant une unité de communication 224 et un contrôleur 226, tel qu'un microprocesseur. L'unité électronique de commande 222 comprend des moyens matériels et logiciels, par exemple le dispositif de commande 104 comprend également un compteur de temps 228, une mémoire 230 dans laquelle peuvent être mémorisées des données de température extérieure T à intervalles sensiblement réguliers sur une période prédéfinie, par exemple sur 24h, ainsi qu'un programme d'analyse mathématique de ces données de température extérieure T. En particulier, le dispositif de commande 104 ne nécessite pas d'horloge précise, mais un simple compteur de temps suffit pour définir la régularité des relevés de mesure.

Les broches de connexion 214 sont reliées à l'unité électronique de commande et permettent de configurer celle-ci depuis le socle 209 du boîtier extérieur 200.

Le dispositif de commande 104 comprend également une batterie rechargeable 204 pour l'alimentation du dispositif et un panneau photovoltaïque 206 relié à la batterie rechargeable 104 et adapté à recharger celle-ci.

Ainsi, le panneau photovoltaïque 206, placé à l'arrière du couvercle 210 translucide, peut être exposé aux radiations solaires pour recharger la batterie rechargeable 104.

Le moyen de détermination de luminosité 220 permet de déterminer un degré de luminosité ambiante dans l'environnement extérieur du bâtiment.

Le moyen de détermination de luminosité 200 peut être un capteur physique, comprenant par exemple une photodiode, un luxmètre, ou être composé d'une ou plusieurs cellules du panneau photovoltaïque 206. Le moyen de détermination de luminosité 220 peut également être un capteur dit virtuel dont les informations captées sont fournies par une station météo externe.

Le dispositif extérieur 200 est avantageusement placé à l'extérieur du bâtiment et fonctionne comme une station météorologique dans la mesure où il inclut notamment, le ou les capteurs de mesure de température extérieure 202 ainsi que le moyen de détermination de luminosité 220. Le dispositif extérieur 200 peut également être adapté pour mesurer d'autres paramètres, par exemple une vitesse de vent ou la présence de pluie. L'unité de communication 224 du dispositif de commande 104 est également adapté pour recevoir des informations relatives à des prévisions météorologiques, par exemple par le biais d'une connexion à un réseau Internet.

Le dispositif de commande 104 comprend en outre un élément d'affichage, non représenté, pour fournir à un utilisateur une valeur de la température extérieure T instantanée et/ou une valeur de luminosité instantanée.

Le dispositif de commande 104 comprend en outre un élément de saisie, non représenté, pour permettre à un utilisateur de configurer des paramètres souhaités, par exemple des seuils ou des modes de pilotage.

L'installation 100, en particulier le dispositif de commande 104 et l'actionneur électromécanique 5 comprennent tous les moyens matériels et/ou logiciels de mise en oeuvre du procédé de gestion objet de l'invention.

L'unité de gestion 102 comprend une unité de traitement agencée pour contenir et exécuter un produit programme d'ordinateur comprenant des portions de code de programme pour l'exécution des étapes d'un procédé de gestion de l'installation domotique 100 selon l'invention.

En particulier, l'unité de gestion 102 est apte à déterminer une gestion automatique d'un positionnement de la protection solaire 3 en fonction d'un ordre de commande fourni par l'unité de commande locale 12 et/ou centrale 13 et/ou le dispositif de commande 104. La gestion automatique de la protection solaire 3 comprend notamment des ordres de commande de déploiement, c'est-à-dire d'ouverture, ou de repli, c'est-à-dire de fermeture de la protection solaire.

L'unité de gestion 102 comprend une mémoire dans laquelle peuvent être stockés des paramètres de pilotage de l'actionneur électromécanique 5 et un ensemble de programmes associés à différents modes de pilotage.

L'unité de gestion 102 est également agencée pour recevoir des données du dispositif de commande 104 notamment des données de température extérieure T ou des données fonction de la température extérieure T. A ce propos, l'unité de gestion 102 comprend un module de communication, agencé pour communiquer avec l'unité de communication 224 du dispositif de commande 104. En particulier, l'unité de gestion est agencée pour mettre en oeuvre différents modes de pilotage de l'actionneur électromécanique 5 en fonction des données de température récoltées par le dispositif de commande 104.

L'unité de gestion 102 comprend également une interface utilisateur. L'interface utilisateur est agencée pour permettre une programmation éventuelle de l'unité de gestion 102.

L'unité de gestion 102 peut être intégrée à l'actionneur électromécanique 5 ou déportée de celui-ci.

Le procédé de gestion conforme à l'invention est décrit ci-dessous en relation avec les figures 6, 7 et 8.

Le procédé a pour objectif de détecter une probabilité qu'une situation de surchauffe S_{c} survienne dans le bâtiment à partir d'informations de température extérieure T au bâtiment et d'agir en conséquence.

Selon un mode de réalisation, la plage de température de confort est comprise dans l'intervalle [16°, 30°], par exemple l'intervalle [19°, 27°], de préférence l'intervalle [21 °, 26°].

Plus précisément, le procédé de gestion selon l'invention a pour objet de modifier la position des protections solaires 3 de sorte à limiter une augmentation de la température intérieure Ti, afin que celle-ci reste dans la plage de température de confort tout en préservant un confort visuel des utilisateurs. Le procédé agit sur les protections solaires 3 lorsque qu'une situation de surchauffe S_{c} liée à une radiation solaire α est considérée comme possible ou probable, notamment lorsque cette probabilité est supérieure à un seuil prédéfini. Plus précisément, le procédé met en position déployée au moins de manière partielle les protections solaires 3 lorsqu'une probabilité de survenue d'une situation de surchauffe S_{c} est détectée.

Le procédé agit de manière proactive, de préférence avant que la situation de surchauffe S_{c} ne puisse être constatée. En particulier, le procédé détermine les paramètres de température extérieure T nécessaire au procédé sur une période de nuit. Le procédé veille également à minimiser l'impact du pilotage des protections solaires sur le confort visuel des utilisateurs.

La température intérieure Ti dans une pièce d'un bâtiment est influencée par différents phénomènes, notamment :
- des conditions climatiques extérieures, dont l'irradiance des objets extérieurs et la température extérieure T;
- les dispositifs de climatisation et de chauffage ;
- des activités effectuées à l'intérieur du bâtiment.

La température extérieure T au bâtiment est essentiellement influencée par les conditions climatiques extérieures, notamment les radiations solaires directes ou réfléchies. Comme vu ci-dessus, cette température extérieure T a un fort impact sur la température intérieure dans le bâtiment. En particulier, la température extérieure T subit des variations diurnes et nocturnes, sous l'influence de la présence ou non de radiations solaires.

Des périodes de faible luminosité et de forte luminosité sont définies sur la base des valeurs de luminosité mesurées et enregistrées au cours du temps. En particulier on caractérise une faible luminosité caractérisant les périodes de faible luminosité par des valeurs inférieures à environ 300 lux et une forte luminosité caractérisant les périodes de forte luminosité par des valeurs supérieures à environ 300 lux ou supérieures à environ 1000 lux. Dans ce dernier cas, les valeurs de luminosité dans l'intervalle, sont dites indéterminées. Des pics de luminosité au cours d'une période de faible luminosité ou des assombrissements pendant une période de plus forte luminosité peuvent parfois occasionner de fausses détections de période et il est avantageux de s'assurer que ces périodes sont durables dans le temps. On cherche ainsi à s'assurer que ces périodes correspondent à une alternance jour/nuit et ceci quelle que soit la localisation du dispositif de commande sur le bâtiment.

Pour des relevés de faible luminosité durables, par exemple s'étendant sur une durée supérieure à plusieurs heures et faisant suite à un état de jour, un compteur de durée de nuit C0 est incrémenté. Un compteur de durée de jour C1 est remis à zéro une fois qu'un état de nuit est confirmé, autrement dit une fois que le compteur de durée de nuit C0 est incrémenté.

De même, le compteur de durée de jour C1 est incrémenté lorsque les relevés de luminosité montrent une forte luminosité durable, par exemple s'étendant sur une durée supérieure à plusieurs heures et faisant suite à un état de nuit.

Lorsque l'état de jour est confirmé :
- On vérifie s'il s'agit d'un début de journée (c'est-à-dire si le compteur de nuit est encore strictement supérieur à 0). Si tel est le cas, on vérifie que la nuit précédente a été de durée suffisamment conséquente avant de mettre à jour les extrema de températures avec les nouvelles valeurs de température de la nuit précédente.
- Sinon, les extrema de température ne sont pas mis à jour.

Le compteur de durée de nuit est remis à zéro une fois que l'état de jour est confirmé, autrement dit une fois que le compteur de jour C1 est incrémenté et que les vérifications précédentes ont été effectuées.

S'il n'est pas possible de déterminer un état de nuit, les données de température minimale et maximales enregistrés précédemment peuvent être conservées et elles ne sont donc pas remises à jour.

La température extérieure T est fortement influencée par les radiations solaires. Notamment les relevés par le capteur de mesure de température 202 soumis à l'influence d'une radiation solaire directe peuvent être biaisés par rapport à un relevé de température extérieure T sans radiation directe sur le capteur.

Le procédé se base donc sur des relevés de température extérieure T dans des conditions de faible luminosité, celles-ci garantissant l'absence de biais lié à des radiations solaires directes α sur le capteur de mesure de température 202.

Plus précisément, l'information de température est uniquement issue d'une succession de mesures de température extérieure T espacées d'un intervalle de temps d'échantillonnage, ce dernier étant de préférence compris entre 0h et 1h, par exemple 15 minutes.

Le procédé mis en oeuvre par le dispositif de commande 104 localisée au moins en partie à l'extérieur du bâtiment et par l'unité de gestion 102 est illustré en figure 6 et comprend les étapes suivantes :
- Une étape E1 de mesure dans laquelle des valeurs de température extérieure T et de luminosité sont relevées;
- Une étape E2 d'analyse dans laquelle les valeurs de luminosité relevées permettent de déterminer au moins une période de faible luminosité pn et d'une période de forte luminosité pj consécutives;
- Une étape E3 de détermination des températures extérieures minimale Tₘᵢₙ et maximale Tₘₐₓ sur la période de faible luminosité pn ;
- Une étape de commande E4, sur la période de forte luminosité, à destination de l'unité de gestion 102, de la position prise par la protection solaire 3 en fonction des températures extérieures minimale Tₘᵢₙ et maximale Tₘₐₓ relevées sur la période de faible luminosité pn, en particulier, une commande pendant la période de forte luminosité pj consécutive.

Le procédé de commande peut également comprendre une étape E5 de commande de retour de la position de la protection solaire à sa position d'origine, c'est à dire celle occupée préalablement à l'étape E4, notamment lorsque la situation de surchauffe n'est plus avérée.

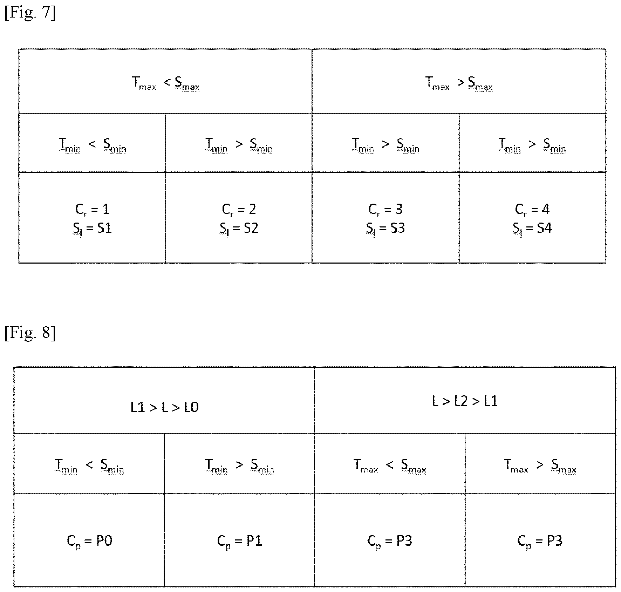

Selon un mode de réalisation, illustré à la figure 7, le procédé détermine un coefficient de réactivité lors de l'étape de commande.

Ce coefficient de réactivité Cᵣ peut être associé à une probabilité de survenue d'une situation de surchauffe, celui-ci déterminant à quelle échéance la position déployée des protections solaires doit être mise en oeuvre pour éviter ou limiter la probable situation de surchauffe S_{c}.

Le procédé mis en oeuvre peut alors comprendre les sous-étapes précédentes, en particulier mises en oeuvre à la suite de l'étape E3 :
- Une étape E3.1 de comparaison de la température extérieure maximale Tₘₐₓ avec un premier seuil Sₘₐₓ;
- Une étape E3.2 de comparaison de la température extérieure minimale Tₘᵢₙ avec un second seuil Sₘᵢₙ ;
- Une étape E3.3 de définition d'un coefficient de réactivité Cᵣ.

L'étape de commande E4 prend ainsi en compte, au travers de l'étape E3.3 le coefficient de réactivité Cᵣ.

Le tableau de la figure 7 résume les conditions possibles déterminées sur la base des informations de température extérieures mesurées dans des conditions de faible luminosité, mises en oeuvre notamment au cours des étapes E3.1 et E3.2.

Lorsque la température extérieure maximale Tₘₐₓ relevée pendant la période de faible luminosité pn est inférieure au premier seuil de température Sₘₐₓ, on analyse la température minimale Tₘᵢₙ relevée pendant la même période de faible luminosité.

Si la température minimale Tₘᵢₙ relevée est inférieure au second seuil Sₘᵢₙ, la probabilité de surchauffe dans le bâtiment est considérée inférieure à un seuil d'action. Un coefficient de réactivité Cᵣ est fixé à une première valeur. Par exemple, le coefficient de réactivité Cᵣ peut, dans ce cas, être fixé à 1 sur une échelle de 1 à 4. Autrement dit, le procédé, au moyen des relevés de température extérieure T pendant la nuit, permet de définir un coefficient de réactivité Cᵣ faible lorsque les deux températures maximales Tₘₐₓ et minimales Tₘᵢₙ relevées sont basses. Une telle situation est considérée comme peu critique dans la prévision de situations de surchauffe S_{c}.

Si la température minimale Tₘᵢₙ relevée est supérieure au second seuil Sₘᵢₙ, la probabilité de surchauffe dans le bâtiment est considérée supérieure au seuil d'action. Le coefficient de réactivité Cᵣ est fixé à une deuxième valeur. Par exemple, le coefficient de réactivité Cᵣ peut, dans ce cas, être fixé à 2 sur une échelle de 1 à 4. Autrement dit, le procédé, au moyen des relevés de température extérieure T pendant la nuit, permet de définir un coefficient de réactivité Cᵣ moyen lorsque la température maximale Tₘₐₓ est basse mais que la température minimale Tₘᵢₙ relevée est haute. Une telle situation est considérée comme modérément critique dans la prévision de situations de surchauffe S_{c}.

Lorsque la température extérieure maximale Tₘₐₓ relevée pendant la période de faible luminosité pn est supérieure au premier seuil Sₘₐₓ, on analyse la température minimale Tₘᵢₙ relevée pendant la même période de faible luminosité.

Si la température minimale Tₘᵢₙ relevée est inférieure au second seuil Sₘᵢₙ, la probabilité de surchauffe dans le bâtiment est considérée supérieure au seuil d'action. Le coefficient de réactivité Cᵣ est fixé à une troisième valeur. Par exemple, le coefficient de réactivité Cᵣ peut, dans ce cas, être fixé à 3 sur une échelle de 1 à 4. Autrement dit, le procédé, au moyen des relevés de température extérieure T pendant la nuit, permet de définir un coefficient de réactivité Cᵣ moyen lorsque la température maximale Tₘₐₓ est haute mais que la température minimale Tₘᵢₙ relevée est basse. Une telle situation est considérée comme modérément critique dans la prévision de situations de surchauffe S_{c}.

Si la température minimale Tₘᵢₙ relevée est supérieure au second seuil Sₘᵢₙ, la probabilité de surchauffe dans le bâtiment est considérée supérieure à un seuil d'action. Le coefficient de réactivité Cᵣ est fixé à une quatrième valeur. Par exemple, le coefficient de réactivité Cᵣ peut, dans ce cas, être fixé à 4 sur une échelle de 1 à 4. Autrement dit, le procédé, au moyen des relevés de température extérieure T pendant la nuit, permet de définir un coefficient de réactivité Cᵣ fort lorsque les deux températures maximales Tₘₐₓ et minimales Tₘᵢₙ relevées sont hautes. Une telle situation est considérée comme fortement critique dans la prévision de situations de surchauffe S_{c}.

Chaque coefficient de réactivité Cᵣ peut correspondre à un seuil de luminosité Sₗ, qui lorsqu'il est atteint, va initier une commande de fermeture des protections solaires commandées par le dispositif de commande 104. Ainsi, l'échéance à laquelle la position déployée des protections solaires doit être mise en oeuvre pour éviter ou limiter la probable situation de surchauffe S_{c} est déterminée par une donnée de luminosité. Alternativement, cette échéance pourrait être donnée par une période de temps, par exemple par une période de temps à compter du dépassement d'un seuil de luminosité.

Ainsi, un coefficient de réactivité Cᵣ à la première valeur ne correspond à aucune commande, quel que soit le niveau de luminosité. Autrement dit, ce coefficient de réactivité Cᵣ correspond à un niveau de luminosité tendant vers l'infini. Alternativement, le coefficient de réactivité Cᵣ à la première valeur peut être associé à un premier seuil de luminosité S1 très élevé, par exemple largement supérieur à 60000 lux, de telle sorte que les mouvements commandés de déploiement des protections solaires 3 aient lieu, non pas sur des critères thermiques, mais pour éviter un éblouissement dans la pièce ou protéger celle-ci de radiations trop intenses.

Un coefficient de réactivité Cᵣ à la deuxième ou troisième valeur correspond à un deuxième ou un troisième seuil de luminosité S2 ou S3 d'environ 25000 lux, au-delà duquel un mouvement de déploiement des protections solaires pourra être commandé.

Un coefficient de réactivité Cᵣ à la quatrième valeur correspond à un quatrième seuil de luminosité S4 d'environ 3000 lux, au-delà duquel un mouvement de déploiement des protections solaires pourra être commandé.

Selon un mode de réalisation, la protection solaire 3 prend une position déployée lorsque la luminosité mesurée à partir du moyen de détermination de luminosité 220 du dispositif de commande 104 est supérieure aux seuils associé au coefficient de réactivité Cᵣ calculé pendant la nuit précédente.

Le calcul de coefficient de réactivité Cᵣ est remis à jour quotidiennement, préférentiellement une fois par 24h.

A l'inverse, lorsque la valeur de luminosité redescend en-dessous d'un seuil de repli, il n'y a plus de risque de surchauffe et la protection solaire 3 peut prendre une position repliée ou rester dans sa position.

Le coefficient de réactivité Cᵣ est déterminé au moins en fonction d'une comparaison des températures minimales Tₘᵢₙ et maximales Tₘₐₓ de la température extérieure aux premier et second seuils Sₘᵢₙ Sₘₐₓ, ce maximum et minimum étant déterminé sur la période de faible luminosité pn.

Alternativement ou en complément, l'étape de commande définit une position intermédiaire à prendre ou autrement dit commande la position intermédiaire prise par la protection solaire en fonction du coefficient de réactivité Cᵣ. En particulier, un premier mouvement vers une position intermédiaire peut être émis lorsque la luminosité dépasse un premier seuil associé au coefficient de réactivité Cᵣ et un deuxième mouvement vers une position totalement fermée peut être émis lorsque la luminosité dépasse un deuxième seuil associé au coefficient de réactivité Cᵣ.

Ainsi, le procédé participe à la prévention de situations de surchauffe S_{c} dans un bâtiment, notamment lors d'une saison d'été et limite les mouvements des protections solaires aux situations utiles. L'intérêt particulier de ce procédé est de s'appuyer principalement sur des mesures température extérieure T fiabilisées.

Selon un mode de réalisation alternatif, illustré à la figure 8, le procédé détermine un coefficient de position lors de l'étape de commande.

Le procédé mis en oeuvre peut alors comprendre les sous-étapes précédentes, en particulier mises en oeuvre à la suite de l'étape E3 :
- Une étape E3.1' de comparaison de la luminosité ambiante à différents seuils L0, L1, L2 de luminosité ;
- Une étape E3.2' de comparaison de la température extérieure maximale Tₘₐₓ avec un premier seuil de position Sₘₐₓ ou une étape de comparaison de la température extérieure minimale Tₘᵢₙ avec un second seuil de position Sₘᵢₙ ; sur l'exemple de la figure 8, le premier seuil de position et le second seuil de position étant égaux respectivement au premier seuil Sₘₐₓ et au second seuil Sₘᵢₙ.
- Une étape E3.3' de définition d'un coefficient de position Cₚ.

L'étape de commande E4 prend ainsi en compte, au travers de l'étape E3.3' le coefficient de position Cₚ.
Le tableau de la figure 8 résume les conditions possibles déterminées sur la base des informations de température extérieures mesurées dans des conditions de faible luminosité, mises en oeuvre notamment au cours des étapes E3.1' et E3.2' et mises en oeuvre en fonction de la luminosité mesurée lors de la période de forte luminosité consécutive.

Lorsque la luminosité L est inférieure à un seuil de luminosité L1 tout en étant supérieure au seuil de luminosité L0 caractérisant la période de faible luminosité passée, on analyse la température minimale Tₘᵢₙ relevée pendant la période de faible luminosité.

Si la température minimale Tₘᵢₙ relevée est inférieure au second seuil de position Sₘᵢₙ, la probabilité de surchauffe dans le bâtiment est considérée inférieure à un seuil d'action. Un coefficient de position Cₚ est fixé à une première valeur P0. Par exemple, la valeur de P0 est de 0%, ce qui implique que l'écran de protection solaire est totalement relevé, de sorte à privilégier au maximum la visibilité vers l'extérieur pour les occupants du bâtiment et la prise en compte d'éventuels apports solaires. En effet, une telle situation est considérée comme peu critique dans la prévision de situations de surchauffe S_{c}.

Si la température minimale Tₘᵢₙ relevée est supérieure au second seuil de position Sₘᵢₙ, la probabilité de surchauffe dans le bâtiment est considérée supérieure à celle de la situation précédente. Le coefficient de position Cₚ est fixé à une deuxième valeur P1. Par exemple, la valeur de P1 est de 30%, ce qui implique que l'écran de protection solaire est partiellement déployé, sur environ 30% de sa course. En effet, une telle situation est considérée comme modérément critique dans la prévision de situations de surchauffe S_{c}. Le déploiement partiel de l'écran de protection solaire peut permettre de bloquer une part du rayonnement solaire qui risquerait de conduire à une situation de surchauffe S_{c}.

Ainsi, le minimum de température nocturne détermine le niveau de fermeture en luminosité moyenne en journée (par exemple pour un ensoleillement en façade compris entre 5000 lux et 20000 lux).

Lorsque la luminosité L est supérieure à un seuil de luminosité L2, lui-même supérieur au seuil de luminosité L1, on analyse la température maximale Tₘₐₓ relevée pendant la période de faible luminosité.

Si la température maximale Tₘₐₓ relevée est inférieure au premier seuil de position Sₘₐₓ, la probabilité de surchauffe dans le bâtiment est considérée supérieure à celle de la situation précédente. Le coefficient de position Cₚ est fixé à une troisième valeur P2. Par exemple, la valeur de P2 est de 50%, ce qui implique que l'écran de protection solaire est partiellement déployé, sur environ 50% de sa course. En effet, une telle situation est considérée comme modérément critique dans la prévision de situations de surchauffe S_{c}. Le déploiement partiel de l'écran de protection solaire peut permettre de bloquer une part du rayonnement solaire qui risquerait de conduire à une situation de surchauffe S_{c}.

Si la température maximale Tₘₐₓ relevée est supérieure au premier seuil de position Sₘₐₓ, la probabilité de surchauffe dans le bâtiment est considérée supérieure à celle de la situation précédente. Le coefficient de position Cₚ est fixé à une quatrième valeur P3. Par exemple, la valeur de P3 est de 80%, ce qui implique que l'écran de protection solaire est partiellement déployé, sur environ 80% de sa course. En effet, une telle situation est considérée comme fortement critique dans la prévision de situations de surchauffe S_{c}. Le déploiement quasi complet de l'écran de protection solaire permet alors de bloquer une part importante du rayonnement solaire qui risquerait de conduire à une situation de surchauffe S_{c}.

Ainsi, le maximum de température nocturne détermine le niveau de fermeture par très forte luminosité (par exemple supérieure à 40000 lux).

Ainsi, un coefficient de position Cₚ à la première valeur ne correspond préférablement à aucune commande. Autrement dit, ce coefficient de position Cₚ correspond à un écran de protection solaire complètement replié.

Lorsque la valeur de luminosité L redescend en-dessous du premier seuil L0, il n'y a plus de risque de surchauffe et la protection solaire 3 peut prendre une position totalement repliée ou rester dans sa position.

Lorsque la valeur de luminosité L est comprise entre les seuils de luminosité L1 et L2, la protection solaire 3 est maintenue dans sa position courante. Ainsi, les seuils de luminosité L1 et L2 forment un hystérésis. Le maintien de la protection solaire 3 dans sa position dans cette plage de luminosité permet d'éviter des mouvements trop fréquents qui pourraient gêner un utilisateur.

Les valeurs correspondantes aux différents coefficients de position et les seuils de température peuvent être ajustés en fonction d'un indice thermo-visuel représentatif d'une préférence ou pondération entre un confort visuel et un confort thermique, choisi par l'utilisateur au moyen de l'élément de saisie du dispositif de commande ou par tout autre moyen approprié. L'indice thermo-visuel peut par exemple prendre une valeur parmi n situations de confort, n étant un entier par exemple égal à 5. Pour un indice 1, respectivement n, c'est le confort visuel, respectivement thermique qui est privilégié par rapport au confort thermique, respectivement visuel. Pour un indice égal à 3, le confort thermique et le confort visuel sont considérés à part égal. Les indices 2 et 4 correspondent alors à des pondérations intermédiaires.

La mise en oeuvre du procédé peut ainsi maintenir une situation de contrôle thermique dans le bâtiment sans gêner l'utilisateur par des mouvements intempestifs contradictoires au sens thermique et sans faire appel à une mesure de température pendant la période de forte luminosité pj, c'est-à-dire pendant la période de commande.

L'utilisation du procédé permet également de s'affranchir d'un paramétrage conséquent pour définir la structure du bâtiment, comme par exemple des coefficients d'isolation thermiques, une géolocalisation, etc.

Ainsi, le procédé est fiable tout en étant mis en oeuvre à partir d'une unité de commande locale 12, non nécessairement connectée à un réseau de communication externe, autonome et facilement installée à l'extérieur d'un bâtiment.

Ainsi, le procédé de gestion peut être mis en oeuvre sans action particulière de l'utilisateur du bâtiment, le dispositif de commande 104 étant autonome en énergie et adapté à fonctionner notamment pendant les périodes chaudes de l'année sans créer de mouvements contre-productifs en saison fraîche, où l'utilisateur souhaiterait plutôt privilégier les apports solaires.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

## Revendications

1. Procédé de gestion d'une installation domotique (100) d'un bâtiment (1) comprenant au moins une protection solaire (3) motorisée, une unité de gestion (102) d'une position prise par la protection solaire (3) au cours du temps, et au moins un dispositif de commande (104) comprenant au moins un capteur de mesure d'une température extérieure (202) au bâtiment (1) et un moyen de détermination de luminosité (220), le procédé étant mis en oeuvre par le dispositif de commande (104) localisé au moins en partie à l'extérieur du bâtiment et comprenant :
- Une étape (E1) de mesure dans laquelle des valeurs de température extérieure (T) et de luminosité (L) sont relevées ;
- Une étape (E2) d'analyse dans laquelle les valeurs de luminosité relevées permettent de déterminer au moins une période de faible luminosité (pn),
- Une étape (E3) de détermination des températures extérieures minimale (Tₘᵢₙ) et maximale (Tₘₐₓ) sur la période de faible luminosité (pn) ;
- Une étape (E4) de commande sur une période de forte luminosité, à destination de l'unité de gestion (102), de la position prise par la protection solaire (3) en fonction des températures extérieures minimale (Tₘᵢₙ) et maximale (Tₘₐₓ) relevées sur la période de faible luminosité (pn), ladite période de forte luminosité étant successive à la période de faible luminosité.

2. Procédé de gestion selon la revendication 1, dans lequel l'étape (E4) de commande est fonction de la luminosité mesurée sur la période de forte luminosité (pj).

3. Procédé de gestion selon l'une quelconque des revendications précédentes, dans lequel la période de faible luminosité (pn) est définie pour des valeurs de luminosité inférieures à 300 lux.

4. Procédé de gestion selon l'une quelconque des revendications précédentes, dans lequel une succession de valeurs de la température extérieure (T) sur la période de faible luminosité (pn) est relevée par échantillonnage de mesures de la température extérieure (T) sur la période de faible luminosité (pn).

5. Procédé de gestion selon l'une quelconque des revendications précédentes, **caractérisé en ce qu'**il comprend une mise à jour d'un premier compteur de temps (C0) associé à la période de faible luminosité (pn) et d'un deuxième compteur de temps (C1) associé à la période de forte luminosité (pj).

6. Procédé de gestion selon l'une quelconque des revendications précédentes, comprenant une étape (E3.3) de détermination d'un coefficient de réactivité (Cᵣ).

7. Procédé de gestion selon la revendication précédente, dans lequel le coefficient de réactivité (Cᵣ) est déterminé en fonction d'une comparaison de la température extérieure maximale (Tₘₐₓ) relevée avec un premier seuil (Sₘₐₓ) et d'une comparaison de la température extérieure minimale (Tₘᵢₙ) avec un second seuil (Sₘᵢₙ).

8. Procédé de gestion selon les revendications 2 pris en combinaison avec la revendication 6 ou 7, dans lequel la protection solaire (3) prend une position au moins partiellement déployée lorsque d'une part le coefficient de réactivité (Cᵣ) déterminé est associé à une commande de mouvement et d'autre part lorsque la valeur de luminosité mesurée dépasse un seuil de luminosité (Si, S1, S2, S3, S4), ledit seuil de luminosité étant associé au coefficient de réactivité (Cᵣ) déterminé.

9. Procédé de gestion selon l'une des revendications 2 à 5, comprenant une étape (E3.3') de détermination d'un coefficient de position (Cₚ).

10. Procédé de gestion selon la revendication précédente, dans lequel le coefficient de position (Cₚ) est déterminé en fonction d'une comparaison de la luminosité mesurée sur la période de forte luminosité avec au moins un seuil de luminosité (Si, L0, L1, L2) et en fonction de la comparaison de la température maximale (Tₘₐₓ) relevée avec un premier seuil de position (Sₘₐₓ) ou d'une comparaison de la température minimale (Tₘᵢₙ) avec un second seuil de position (Sₘᵢₙ).

11. Procédé de gestion selon la revendication précédente, dans lequel le coefficient de position (Cₚ) est déterminé en fonction d'un indice thermo-visuel représentant une pondération entre confort thermique et confort visuel, présélectionné par un utilisateur de l'installation domotique (100).

12. Dispositif de commande (104) d'une installation domotique (100) d'un bâtiment mettant en oeuvre un procédé de gestion selon l'une quelonque des revendications précédentes, comprenant un capteur de mesure de température extérieure (202) et un moyen de détermination de luminosité (220), le dispositif de commande (104) comprenant une unité électronique de commande (222) comprenant une unité de communication (224) et un contrôleur (226).

13. Dispositif de commande (104) selon la revendication précédente, comprenant un panneau photovoltaïque (106) et une batterie rechargeable (104) alimentant le dispositif de commande, le dispositif de commande étant adapté à être fixé sur une façade à l'extérieur du bâtiment, le panneau photovoltaïque (106) étant adapté à recharger la batterie.

14. Dispositif de commande (104) selon la revendication précédente, dans lequel le moyen de détermination de luminosité (220) est une mesure du courant fourni par le panneau photovoltaïque (106) à la batterie rechargeable (104).
